# EUROPÄISCHE PATENTSCHRIFT

(11) **EP 3 548 336 B1**
(45) Veröffentlichungstag und Bekanntmachung des Hinweises auf die Patenterteilung: **08.04.2020**
(21) Anmeldenummer: 18708359.7
(22) Anmeldetag: 21.02.2018
(51) Int. Cl.: B60Q 1/08, F21S 43/14, F21S 43/237, F21S 43/245, F21S 43/247, G01M 11/06

(54) **ÄNDERN EINES HELLIGKEITSGRADIENTEN EINES SCHEINWERFERS DURCH DIMMEN VON LEUCHTPUNKTEN**
CHANGING A BRIGHTNESS GRADIENT OF A HEADLIGHT BY DIMMING LUMINOUS ELEMENTS
MODIFICATION D'UN GRADIENT DE LUMINOSITÉ D'UN PHARE PAR VARIATION DE POINTS LUMINEUX

(30) Priorität: 23.02.2017 DE 102017202980
(43) Veröffentlichungstag der Anmeldung: 09.10.2019
(73) Patentinhaber: Audi AG, 85045 Ingolstadt (DE)
(72) Erfinder: GUT, Carsten, 88662 Überlingen (DE)
(86) Internationale Anmeldenummer: PCT/EP2018/054263
(87) Internationale Veröffentlichungsnummer: WO 2018/153906

(56) Entgegenhaltungen:
- EP-A1- 2 979 923
- EP-A1- 3 246 204
- DE-A1-102013 020 754
- JP-A- 2013 054 956

## Beschreibung

Die Erfindung betrifft ein Verfahren zum Betreiben eines Scheinwerfers für ein Kraftfahrzeug, wobei eine Vielzahl von Leuchtpunkten des Scheinwerfers derart eingeschaltet und ausgeschaltet werden, dass ein Leuchtkegel vorbestimmter Position und Form erzeugt wird. Ein zweiter Aspekt der Erfindung betrifft ein Scheinwerfersystem für ein Kraftfahrzeug. Ein dritter Aspekt der Erfindung betrifft ein Kraftfahrzeug mit dem genannten Scheinwerfersystem. Die DE 10 2009 048 488 A1 betrifft einen Scheinwerfer umfassend eine LED-Lichtquelle mit einer Längserstreckung in Richtung ihrer Längsachse und einen Reflektor mit einer Lichtabstrahlungsrichtung entlang einer z-Achse eines Koordinatensystems. Um bei gegebener Reflektorkontur und Reflektorausformung diesen optimal ausnutzen zu können, wird vorgeschlagen, dass die Lage der LED-Lichtquelle derart gewählt ist, dass sie um die x-Achse beziehungsweise die y-Achse gedreht ist.

Die DE 10 2014 216 545 A1 stellt eine Scheinwerfervorrichtung für ein Kraftfahrzeug mit einem ersten Scheinwerfer für eine erste Fahrzeugseite und mit einem zweiten Scheinwerfer für eine zweite Fahrzeugseite bereit. Jeder der beiden Scheinwerfer erzeugt eine zeilenförmige Fernlichtverteilung mit wenigstens zwei in horizontaler Richtung versetzt zueinander und vertikal auf gleicher Höhe angeordneten Einzellichtverteilungen. Die vom ersten Scheinwerfer erzeugte zeilenförmige Fernlichtverteilung ist in vertikaler Richtung breiter als die vom zweiten Scheinwerfer erzeugte zeilenförmige Fernlichtverteilung und läuft nach oben hin weich aus, während die schmalere zeilenförmige Fernlichtverteilung nach oben durch eine scharfe Hell-Dunkel-Grenze begrenzt wird.

Ein Scheinwerfer für ein Kraftfahrzeug, insbesondere zum Bereitstellen eines Abblendlichtes, kann eine Lichtverteilung beziehungsweise einen Leuchtkegel abstrahlen, der besondere praktische und/oder gesetzliche Anforderungen erfüllen muss. Beispielsweise muss Hell-Dunkel-Grenze der Lichtverteilung beziehungsweise des Leuchtkegels bereitgestellt sein, die ein Blenden eines Gegenverkehrs minimiert und/oder gesetzliche Anforderungen erfüllt. Eine scharfe Hell-Dunkel-Grenze, beziehungsweise ein hoher Helligkeitsgradient an der Hell-Dunkel-Grenze kann eine optimale Ausleuchtung bei einer geringen Blendung des Gegenverkehrs ermöglichen, wird jedoch im Allgemeinen als störend empfunden.

Die DE 10 2012 004 823 A1 betrifft eine Blende für einen Fahrzeugscheinwerfer, die eine Außenkontur aufweist, die geeignet ist, einen Lichtkegel mit einer Hell-Dunkel-Grenze zu erzeugen, wobei die Blende im Bereich einer Außenkante eine teiltransparente Strukturierung aufweist, die so ausgestaltet ist, dass ein Gradient der Hell-Dunkel-Grenze einen stetigen Verlauf aufweist. Die Blende und ein Drehmechanismus ermöglichen eine dynamische Anpassung des Gradienten der Hell-Dunkel-Grenze.

Heutige Scheinwerfersysteme haben einen fest definierten Helligkeitsgradienten an einer Hell-Dunkel-Grenze eines Abblendlichtes beziehungsweise zwischen dem Abblendlicht und Fernlicht. Dieser feste Helligkeitsgradient ist durch das Scheinwerfersystem vorgegeben. Der Helligkeitsgradient kann nicht angepasst werden, da die Mechanik nicht geändert werden kann.

Es ist Aufgabe der vorliegenden Erfindung, eine Ausleuchtung an der Hell-Dunkel-Grenze variabel zu gestalten.

Diese Aufgabe wird erfindungsgemäß gelöst durch ein Verfahren zum Betreiben eines Scheinwerfers für ein Kraftfahrzeug mit den Merkmalen des Patentanspruchs 1. Die Aufgabe wird außerdem gelöst durch ein Scheinwerfersystem für ein Kraftfahrzeug mit den Merkmalen des Patentanspruchs 6 und durch ein Kraftfahrzeug mit einem solchen Scheinwerfersystem. Vorteilhafte Ausführungsformen mit zweckmäßigen Ausgestaltungen des erfindungsgemäßen Verfahrens und des erfindungsgemäßen Scheinwerfersystems sind Gegenstand der abhängigen Patentansprüche.

Bei einem Verfahren zum Betreiben eines Scheinwerfers für ein Kraftfahrzeug wird eine Vielzahl von Leuchtpunkten des Scheinwerfers angesteuert, wobei jeder Leuchtpunkt aus der Vielzahl von Leuchtpunkten einen jeweiligen vorbestimmten Raumwinkelbereich ausleuchtet. Jeder Leuchtpunkt aus der Vielzahl von Leuchtpunkten kann insbesondere als jeweils eigene Lichtquelle aufgefasst werden. Vorzugsweise überlappen die jeweiligen vorbestimmten Raumwinkelbereiche, die jeder Leuchtpunkt aus der Vielzahl von Leuchtpunkten ausleuchtet, maximal um ein vorbestimmtes Maß.

Einzelne Leuchtpunkte aus der Vielzahl von Leuchtpunkten des Scheinwerfers können derart eingeschaltet und ausgeschaltet werden, dass der Scheinwerfer eine vorbestimmten Lichtverteilung abstrahlt. Die vorbestimmte Lichtverteilung kann einen Leuchtkegel vorbestimmter Form und Position relativ zu dem Kraftfahrzeug hervorrufen, wenn sich das Kraftfahrzeug auf einer ausgedehnten, ebenen Fläche, beispielsweise einem Fahrbahnbereich, befindet. Insbesondere werden dann die einzelnen Leuchtpunkte aus der Vielzahl von Leuchtpunkten des Scheinwerfers derart eingeschaltet und ausgeschaltet, dass der Scheinwerfer den Leuchtkegel vorbestimmter Form und/oder Position relativ zu dem Kraftfahrzeug auf den Fahrbahnbereich wirft. Die vorbestimmte Lichtverteilung und/oder der Leuchtkegel vorbestimmter Form und Position können derart ausgeführt sein, dass eine geringe Blendung eines Gegenverkehrs und/oder eine optimale Ausleuchtung, insbesondere des Fahrbahnbereichs, ermöglicht werden. Die vorbestimmte Lichtverteilung und/oder der Leuchtkegel vorbestimmter Form und Position weist erfindungsemäß eine Hell-Dunkel-Grenze auf. Die Hell-Dunkel-Grenze charakterisiert insbesondere einen Rand der vorbestimmten Helligkeitsverteilung und/oder des vorbestimmten Leuchtkegels. Zusätzlich kann die vorbestimmte Lichtverteilung eine Projektion aufweisen. Bei der Projektion handelt es sich beispielsweise um Bereiche der vorbestimmten Helligkeitsverteilung, die mit unterschiedlicher Intensität ausgeleuchtet werden. Wird die vorbestimmte Helligkeitsverteilung auf die ausgedehnte, ebene Fläche projiziert, kann die Projektion ein vorbestimmtes Muster auf der ausgedehnten, ebenen Fläche hervorrufen.

Um nun eine Ausleuchtung an der Hell-Dunkel-Grenze variabel zu gestalten, ist erfindungsgemäß vorgesehen, dass durch Einstellen der Helligkeit von Leuchtpunkten aus der Vielzahl von Leuchtpunkten ein Helligkeitsgradient der vorbestimmten Helligkeitsverteilung verändert wird. Insbesondere wird durch Einstellen der Helligkeit von Leuchtpunkten aus der Vielzahl von Leuchtpunkten ein Helligkeitsgradient an einem Rand, vorzugsweise der Hell-Dunkel-Grenze, der vorbestimmten Helligkeitsverteilung verändert. Alternativ oder zusätzlich kann ein Helligkeitsgradient an der Projektion verändert werden. Zum Einstellen der Helligkeit können die Leuchtpunkte beispielsweise gedimmt werden. Vorzugsweise wird die Helligkeit von Leuchtpunkten eingestellt, die einen Raumwinkelbereich an einem Rand der vorbestimmten Lichtverteilung ausleuchten. Insbesondere erfolgt das Einstellen der Helligkeit durch Dimmen der Leuchtpunkte. Das Einstellen der Helligkeit kann durch eine elektronische Regelung erfolgen. Beispielsweise wird ein Lichtstrom der Leuchtpunkte eingestellt. Durch das Verändern des Helligkeitsgradienten kann eine Schärfe der Hell-Dunkel-Grenze verändert werden. Beispielsweise kann wahlweise ein, beispielsweise gegenüber einem Grundwert, weicherer (kleiner Helligkeitsgradient) Übergang an der Hell-Dunkel-Grenze oder ein, beispielsweise gegenüber dem Grundwert, schärferer (großer Helligkeitsgradient) Übergang an der Hell-Dunkel-Grenze eingestellt werden. Alternativ oder zusätzlich kann der Helligkeitsgradient an der Projektion verändert werden. Somit kann ein, beispielsweise gegenüber dem Grundwert, weicherer Übergang an der Projektion beziehungsweise dem Muster oder ein, beispielsweise gegenüber dem Grundwert, schärferer (großer Helligkeitsgradient) Übergang an der Projektion beziehungsweise dem Muster eingestellt werden. Insbesondere kann der Helligkeitsgradient an eine Fahrsituation angepasst werden.

Der Helligkeitsgradient kann beispielsweise verändert werden, ohne die Form und/oder Position der vorbestimmten Helligkeitsverteilung und/oder des vorbestimmten Leuchtkegels zu beeinflussen. Die Form und/oder Position vorbestimmte Lichtverteilung und/oder der vorbestimmte Leuchtkegel ist beispielsweise durch die Lage der jeweiligen Ränder definiert. Die Lage der jeweiligen Ränder sind insbesondere dadurch definiert, dass eine Helligkeit der vorbestimmten Lichtverteilung und/oder des vorbestimmten Leuchtkegels auf den jeweiligen Rändern einen vorbestimmten Bruchteil, insbesondere die Hälfte, einer maximalen Helligkeit der vorbestimmten Lichtverteilung und/oder des vorbestimmten Leuchtkegels beträgt. Der Helligkeitsgradient kann beispielsweise verändert werden, ohne die Lage der jeweiligen Ränder zu beeinflussen.

Erfindungsgemäß wird ein Wert für den Helligkeitsgradienten in Abhängigkeit von einem Müdigkeitsniveau des Fahrers und/oder einer Fahrtdauer eingestellt. Zusätzlich kann der Wert für den Helligkeitsgradienten in Abhängigkeit von Präferenzdaten eines Fahrers, oder einer Wettergröße eingestellt werden. Die Präferenzdaten können aus einer Eingabevorrichtung empfangen werden. Insbesondere geben die Präferenzdaten an, ob der Fahrer einen, beispielsweise gegenüber dem Grundwert, größeren oder kleineren Helligkeitsgradienten bevorzugt. Das Müdigkeitsniveau des Fahrers kann durch Müdigkeitsdaten charakterisiert sein. Das Erfassen von Müdigkeitsdaten, die das Müdigkeitsniveau des Fahrers charakterisieren, ist aus dem Stand der Technik bekannt. Die Fahrtdauer kann eine voraussichtliche Fahrtdauer zu einem Zielort und/oder eine bisherige Fahrtdauer seit Fahrtantritt angeben. Die Wettergröße kann aus einer oder mehreren Ermittlungseinrichtungen des Kraftfahrzeugs empfangen werden. Mehrere Wetterdaten, wie beispielsweise eine Sichtweite, eine Niederschlagsmenge, eine Niederschlagsart, eine Nebelintensität oder eine Sonneneinstrahlung angeben, können zu der Wettergröße zusammengefasst werden. Die gegebenen Beispiele ermöglichen besonders gut ein Anpassen des Helligkeitsgradienten an die Fahrsituation.

Eine Weiterbildung der Erfindung sieht vor, dass der Helligkeitsgradient in Abhängigkeit von der Wettergröße auf einen ersten Wert eingestellt wird, wenn eine Niederschlagsintensität und/oder eine Nebelintensität einen vorbestimmten Grenzwert überschreitet, und auf einen zweiten Wert eingestellt wird, wenn die Niederschlagsintensität und/oder die Nebelintensität den vorbestimmten Grenzwert unterschreitet. Insbesondere ist der erste Wert größer als der zweite Wert. Mit anderen Worten wird der Helligkeitsgradient auf einen höheren Wert eingestellt, wenn die Niederschlagsintensität und/oder eine Nebelintensität den vorbestimmten Grenzwert überschreitet, als wenn die Niederschlagsintensität und/oder die Nebelintensität den vorbestimmten Grenzwert unterschreitet. Die Niederschlagsintensität und/oder die Nebelintensität kann Teil der Wettergröße sein. Durch Einstellen eines größeren Helligkeitsgradienten kann einer diffusen Hell-Dunkel-Grenze aufgrund von Niederschlag und/oder Nebel entgegengewirkt werden.

Eine Weiterbildung der Erfindung sieht vor, dass der Helligkeitsgradient auf einen weiteren ersten Wert eingestellt wird, wenn das Müdigkeitsniveau des Fahrers und/oder die Fahrtdauer einen weiteren vorbestimmten Grenzwert unterschreitet. Alternativ oder zusätzlich kann vorgesehen sein, dass der Helligkeitsgradient auf einen weiteren zweiten Wert eingestellt wird, wenn das Müdigkeitsniveau des Fahrers und/oder die Fahrtdauer einen weiteren vorbestimmten Grenzwert überschreitet. Insbesondere ist der weitere erste Wert größer als der weitere zweite Wert. Mit anderen Worten wird ein größerer Helligkeitsgradient eingestellt, wenn das Müdigkeitsniveau des Fahrers und/oder die Fahrtdauer den vorbestimmten Grenzwert unterschreitet, als in dem Fall dass das Müdigkeitsniveau des Fahrers und/oder die Fahrtdauer den vorbestimmten Grenzwert überschreitet. Dadurch kann berücksichtigt werden, dass ein größerer Helligkeitsgradient zwar eine bessere Ausleuchtung des Fahrbahnabschnitts jedoch auch eine schnellere Ermüdung des Fahrers mit sich bringen kann.

Eine Weiterbildung der Erfindung sieht vor, dass das Einschalten und Ausschalten der einzelnen Leuchtpunkte aus der Vielzahl von Leuchtpunkten durch Kalibrieren erfolgt, wobei die vorbestimmte Lichtverteilung durch eine Erfassungseinrichtung erfasst wird und das Kalibrieren durch Vergleichen der erfassten Lichtverteilung mit gespeicherten Leuchtkegeldaten erfolgt. Beispielsweise ist die vorbestimmte Lichtverteilung beziehungsweise ein durch die Erfassungseinrichtung erfasstes Abbild der vorbestimmten Lichtverteilung Teil der gespeicherten Leuchtkegeldaten. Bei dem Kalibrieren können die einzelnen Leuchtpunkte dann derart eingeschaltet und ausgeschaltet werden, dass die erfasste Lichtverteilung dem Abbild der vorbestimmten Lichtverteilung entspricht.

Eine Weiterbildung der Erfindung sieht vor, dass der Helligkeitsgradient für das Kalibrieren auf einen Wert eingestellt wird, der größer ist, als ein Wert, auf den der Helligkeitsgradient während einer Fahrt des Kraftfahrzeugs eingestellt wird. Durch den größeren Wert für den Helligkeitsgradienten während des Kalibrierens kann eine Genauigkeit der Kalibrierung verbessert werden. Dadurch, dass der Helligkeitsgradient während der Fahrt des Kraftfahrzeugs auf einen kleineren Wert als während des Kalibrierens eingestellt wird, kann ein für den Fahrer störend großer Helligkeitsgradient während der Fahrt vermieden werden.

Ein zweiter Aspekt der Erfindung betrifft ein Scheinwerfersystem für ein Kraftfahrzeug. Das Scheinwerfersystem umfasst einen Scheinwerfer, der eine Vielzahl von Leuchtpunkten aufweist, wobei jeder Leuchtpunkt aus der Vielzahl von Leuchtpunkten einen jeweiligen vorbestimmten Raumwinkelbereich ausleuchtet. Die Vielzahl von Leuchtpunkten kann beispielsweise entlang einer oder mehrerer Zeilen und/oder entlang einer oder mehrerer Spalten angeordnet sein. Das Scheinwerfersystem umfasst außerdem eine Steuereinheit, die dazu eingerichtet ist, die Vielzahl von Leuchtpunkten des Scheinwerfers derart anzusteuern, dass der Scheinwerfer eine vorbestimmte Lichtverteilung erzeugt. Erfindungsgemäß ist die Steuereinheit außerdem dazu eingerichtet, durch Einstellen einer Helligkeit von Leuchtpunkten aus der Vielzahl von Leuchtpunkten ein Ändern eines Helligkeitsgradienten an einem Rand der vorbestimmten Lichtverteilung zu ermöglichen. Insbesondere ist die Steuereinheit dazu eingerichtet, die Leuchtpunkte aus der Vielzahl von Leuchtpunkten beziehungsweise die Helligkeit der Leuchtpunkte aus der Vielzahl von Leuchtpunkten dimmen.

Eine Weiterbildung sieht vor, dass der Scheinwerfer ein Matrixleuchtmittel, eine Anordnung von Mikrospiegeln, eine Anordnung von Flüssigkristallen oder einen Laserscanner aufweist. Ein derartiger Scheinwerfer kann, beispielsweise aufgrund eines hohen Kontrast und einer hohen Auflösung der Vielzahl von Leuchtpunkten, ein besonders vorteilhaftes Ändern des Helligkeitsgradienten ermöglichen.

Als besonders vorteilhaft für das erfindungsgemäße Verfahren und für das erfindungsgemäße Scheinwerfersystem hat sich erwiesen, dass der Scheinwerfer dazu ausgebildet ist, zumindest zehn Linienpaare pro Grad umzusetzen. Als ein Linienpaare können zwei benachbarte Leuchtpunkte aus der Vielzahl von Leuchtpunkten aufgefasst werden, wobei der erste Leuchtpunkt mit maximaler Helligkeit und der andere Leuchtpunkt mit minimaler Helligkeit leuchtet. Mit anderen Worten strahlen bei dem genannten Scheinwerfer zwanzig benachbarte Leuchtpunkte auf einen ebenen Winkelbereich von 1°, wobei innerhalb des Winkelbereichs von 1° zwanzig Hell-Dunkel-Übergänge auflösbar sind. Insbesondere ist der Scheinwerfer dazu ausgebildet, die zumindest zehn Linienpaare pro Grad bei einem Michelson-Kontrast von zumindest 0,98 umzusetzen. Bei einem Michelson-Kontrast von 0,98 kann die Helligkeit zweier benachbarter Leuchtpunkte beispielsweise 60.000 cd und 350 cd betragen. Dadurch ist eine besonders feine Regelung des Helligkeitsgradienten möglich.

Ein dritter Aspekt der Erfindung betrifft ein Kraftfahrzeug mit einem Scheinwerfersystem der oben genannten Art. Vorzugsweise umfasst das Kraftfahrzeug zwei Scheinwerfersysteme der oben genannten Art, beispielsweise als linken Frontscheinwerfer und als rechten Frontscheinwerfer.

Zu der Erfindung gehören auch Weiterbildungen des erfindungsgemäßen Kraftfahrzeugs und des erfindungsgemäßen Scheinwerfersystems, die Merkmale aufweisen, wie sie bereits im Zusammenhang mit den Weiterbildungen des erfindungsgemäßen Verfahrens beschrieben worden sind und umgekehrt. Aus diesem Grund sind die entsprechenden Weiterbildungen des erfindungsgemäßen Kraftfahrzeugs und des erfindungsgemäßen Scheinwerfersystems hier nicht noch einmal beschrieben.

Im Folgenden sind Ausführungsbeispiele der Erfindung beschrieben. Hierzu zeigt:
- Fig. 1: ein Kraftfahrzeug mit einem Scheinwerfersystem aus einer schematischen Vogelperspektive;
- Fig. 2: einen beispielhaften Verlauf einer Hell-Dunkel-Grenze in einem Graphen;
- Fig.: 3 zwei unterschiedliche Helligkeitsverlaufe an der Hell-Dunkel-Grenze mit unterschiedlichen Helligkeitsgradienten;
- Fig. 4: eine äußerst schematische Frontansicht eines Scheinwerfers mit einer Vielzahl von Leuchtpunkten.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

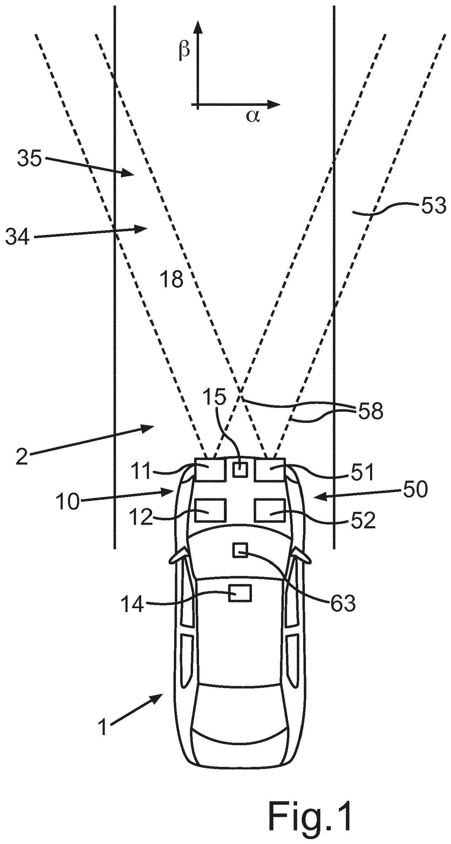

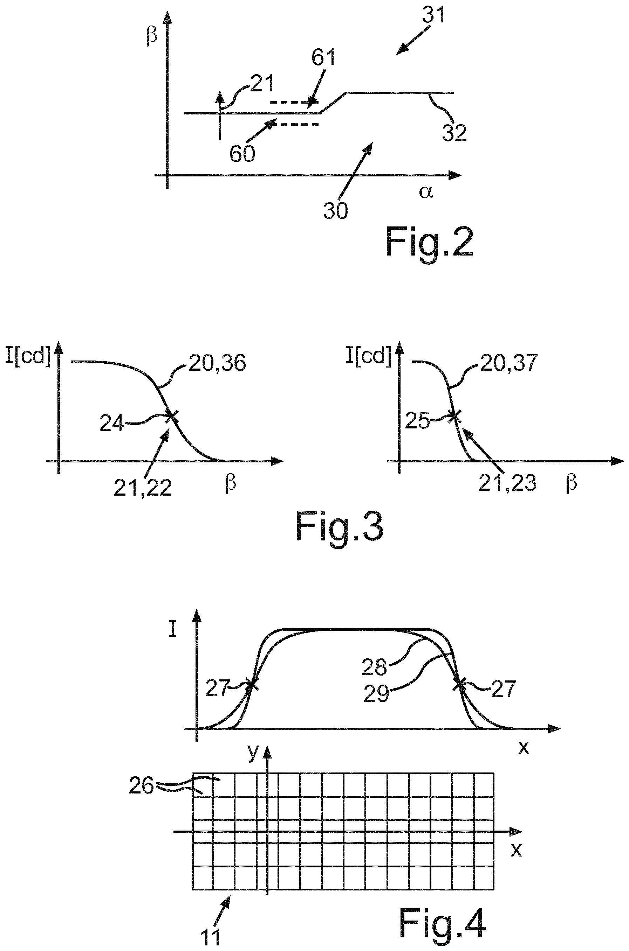

Fig. 1 zeigt aus einer schematischen Vogelperspektive ein Kraftfahrzeug 1 mit einem Scheinwerfersystem 10. Bei dem Kraftfahrzeug 1 handelt es sich insbesondere um einen Kraftwagen, beispielsweise einen Personenkraftwagen oder einen Lastkraftwagen. Das Scheinwerfersystem 10 umfasst vorliegend einen Scheinwerfer 11 sowie eine Steuereinheit 12. Das Scheinwerfersystem 10 kann zu Bereitstellen eines Abblendlichtes und/oder eines Fernlichtes ausgebildet sein. Fig. 4 zeigt eine äußerst schematische Vorderansicht des Scheinwerfers 11, der eine Vielzahl von Leuchtpunkten 26 aufweist, wobei jeder Leuchtpunkt 26 aus der Vielzahl von Leuchtpunkten 26 einen jeweiligen vorbestimmten Raumwinkelbereich ausleuchtet. Die Leuchtpunkte 26 sind vorliegend in mehreren Spalten, entlang einer y-Achse, sowie in mehreren Zeilen, entlang einer x-Achse, angeordnet. Der Scheinwerfer 11 ist derart ausgebildet, dass jeder der Leuchtpunkte 26 einen jeweiligen vorbestimmten Raumwinkelbereich ausleuchtet. Insbesondere sind die Leuchtpunkte des Scheinwerfers derart angeordnet, dass jeder Leuchtpunkt 26 Licht in den jeweiligen vorbestimmten Raumwinkelbereich abstrahlt. Insbesondere überlappen die jeweiligen Raumwinkelbereich, beispielsweise zweier benachbarter Leuchtpunkte 26, maximal um ein vorbestimmtes Maß.

Vorteilhafterweise ist der Scheinwerfer dazu ausgebildet, zumindest zehn Linienpaare pro Grad umzusetzen. Als Linienpaar können zwei benachbarte Leuchtpunkte bezeichnet werden, welche insbesondere einzeln auflösbar sind. Das bedeutet, dass zwanzig Leuchtpunkte 26, welche beispielsweise in einer Zeile nebeneinander oder in einer Spalte übereinander angeordnet sind, in einer Ebene, die insbesondere parallel zur Ausrichtung der jeweiligen Leuchtpunkte 26 ausgerichtet ist, zusammen einen Winkel von 1° ausleuchten. Diese Ausleuchtung ermöglicht insbesondere einen Michelson-Kontrast von zumindest 0,98. Das bedeutet, dass die jeweiligen Raumwinkelbereiche, welche durch zwei benachbarte Leuchtpunkte 26 ausgeleuchtet werden, eine deutlich unterschiedliche Helligkeit aufweisen. Ein Michelson-Kontrast von 0,98 entspricht beispielsweise einer Helligkeit der beiden Leuchtpunkte 26 beziehungsweise der durch die Leuchtpunkte 26 ausgeleuchteten jeweiligen Raumwinkelbereiche von 60.000 cd und 350 cd.

Der Scheinwerfer 11 ist beispielsweise als Matrixleuchtmittel ausgeführt. Der Scheinwerfer 11 kann eine Anordnung von Mikrospiegeln umfassen, beispielsweise ein Digital Micromirror Device (DMD), oder eine Anordnung von Flüssigkristallen umfassen, beispielsweise nach Art eines Flüssigkristall-Projektor (LCD oder LCos). Alternativ oder zusätzlich kann der Scheinwerfer 11 einen Laserscanner aufweisen.

Die Steuereinheit 12 ist dazu eingerichtet, die Vielzahl von Leuchtpunkten 26 des Scheinwerfers 11 derart anzusteuern, dass der Scheinwerfer 11 eine vorbestimmte Lichtverteilung 34 erzeugt. Die vorbestimmte Lichtverteilung ist beispielsweise definiert durch jeweilige Lichtintensitäten, die unter jeweiligen Raumwinkelbereichen durch den Scheinwerfer 11 abgestrahlt werden. Befindet sich das Kraftfahrzeug 1 mit dem Scheinwerfer 11 beziehungsweise der Scheinwerfer 11 auf einer ausgedehnten, ebenen Fläche, beispielsweise einem Fahrbahnbereich 2, so wirft die vorbestimmte Lichtverteilung 34 einen Leuchtkegel 35 vorbestimmter Form und Position, insbesondere relativ zu dem Kraftfahrzeug 1, auf die ausgedehnte, ebene Fläche. Die Lichtverteilung 34 beziehungsweise der Leuchtkegel 35 weisen beispielsweise an ihrem Rand 18 eine Hell-Dunkel-Grenze 32 auf. Ein Beispiel für eine Hell-Dunkel-Grenze 32 ist in Fig. 2 grafisch dargestellt. Die Koordinatenachsen in Fig. 2 sind gemäß einer Fahrzeugquerrichtung α und einer Fahrzeuglängsrichtung β des Kraftfahrzeugs 1 ausgerichtet. Die Hell-Dunkel-Grenze 32 gemäß Fig. 2 kann einer Hell-Dunkel-Grenze zwischen einem Abblendlicht und einem Fernlicht des Kraftfahrzeugs 1 entsprechen. Vorliegend wird ein Bereich 30 unterhalb der Hell-Dunkel-Grenze 32 durch das Abblendlicht ausgeleuchtet. Um ein Blenden eines Gegenverkehrs zu vermeiden, ist ein Bereich 31 oberhalb der Hell-Dunkel-Grenze 32 nicht durch das Abblendlicht ausgeleuchtet. Der Bereich 31 kann durch Zuschalten des Fernlichts ausgeleuchtet werden, wenn eine Blendung des Gegenverkehrs ausgeschlossen ist. Senkrecht zu der Hell-Dunkel-Grenze 32 ergibt sich ein Helligkeitsgradient 21.

Der Helligkeitsgradient 21 an kann alternativ oder zusätzlich an einer Projektionen verändert werden. Bei Projektionen handelt es sich insbesondere um unterschiedlich stark ausgeleuchtete Bereiche der vorbestimmten Lichtverteilung 34 beziehungsweise des vorbestimmten Lichtkegels 35. Durch unterschiedliche Beleuchtungsintensitäten kann an der Projektion der Helligkeitsgradient 21 auftreten. Wird die vorbestimmte Helligkeitsverteilung 34 auf die ausgedehnte, ebene Fläche projiziert, kann die Projektion ein vorbestimmtes Muster auf der ausgedehnten, ebenen Fläche hervorrufen. Die Veränderung des Helligkeitsgradienten 21 an der Projektion erfolgt insbesondere analog zur Veränderung des Helligkeitsgradienten 21 an der Hell-Dunkel-Grenze 32.

Fig. 3 zeigt zwei beispielhafte Helligkeitsverläufe in Fahrzeuglängsrichtung β an der Hell-Dunkel-Grenze 32. Der Helligkeitsverlauf 20 ist demnach als Intensität I gemäß der Fahrzeuglängsrichtung β aufgetragen. Durch den Abfall der Helligkeitsverteilung 20 an der Hell-Dunkel-Grenze 32 kann sich der Helligkeitsgradient 21 ergeben. Die erste Helligkeitsverteilung 37 fällt dabei stärker, insbesondere in einem kürzeren Wegbereich gemäß der Fahrzeuglängsrichtung β, als die zweite Helligkeitsverteilung 36. Daraus folgt ein größerer Helligkeitsgradient 21 der ersten Helligkeitsverteilung 37 gegenüber der Helligkeitsverteilung 36. Der Helligkeitsgradient 21 weist für die Helligkeitsverteilung 37 einen ersten Wert 23 auf. Analog weist der Helligkeitsgradient 21 für die Helligkeitsverteilung 36 einen zweiten Wert 22 auf. Durch den ersten Wert 23 des Helligkeitsgradienten 21 ergibt sich für die Helligkeitsverteilung 37 ein schärferer Übergang an der die Helligkeitsverteilung 32 verglichen mit der Helligkeitsverteilung 36. Analog ergibt sich durch den zweiten Wert des Gradienten 22 ein weicherer Übergang an der die Helligkeitsverteilung 32 verglichen mit dem Helligkeitsverlauf 37. Vorliegend ist der erste Wert 23 größer als der zweite Wert 22.

Unterschiedliche Werte, beispielsweise der erste Wert 23 und der zweite Wert 22, für den Helligkeitsgradienten 21 an der Hell-Dunkel-Grenze 32 können durch Einstellen der Helligkeit von Leuchtpunkten 26 erzielt werden. Insbesondere wird durch Einstellen der Helligkeit der Leuchtpunkte 26 der Helligkeitsgradient 21 an dem Rand 18 der vorbestimmten Lichtverteilung 34 verändert. Insbesondere wird der Helligkeitsgradient 21 durch Einstellen der Helligkeit von Leuchtpunkten 26 verändert, die einen jeweiligen Raumwinkelbereich an dem Rand 18 der vorbestimmten Lichtverteilung 34 ausleuchten. In Bezug auf Fig. 2 kann beispielsweise die Helligkeit von Leuchtpunkten 26, die einen Randbereich 60 direkt unterhalb der Hell-Dunkel-Grenze 32 ausleuchten, beispielsweise bezogen auf einen Grundwert, verringert werden, um den Helligkeitsgradienten zu verringern, und/oder erhöht werden, um den Helligkeitsgradienten 21 zu erhöhen. Beispielsweise kann die Helligkeit von Leuchtpunkten 26, die einen Randbereich 61 direkt oberhalb der Hell-Dunkel-Grenze 32 ausleuchten, beispielsweise gegenüber einem weiteren Grundwert, erhöht werden, um den Helligkeitsgradienten 21 zu verringern, und/oder verringert werden, um den Helligkeitsgradienten 21 zu erhöhen.

Dies ist exemplarisch in Fig. 4 dargestellt. Das Diagramm zeigt 2 beispielhafte Intensitätsverläufe 28, 29 der Helligkeit von Leuchtpunkten 26, die entlang einer Zeile längs zur x-Achse angeordnet sind. Eine erste Intensitätsverteilung 29 kann beispielsweise in der ersten Helligkeitsverteilung 37 resultieren. Insbesondere kann die erste Intensitätsverteilung 29 in dem ersten Wert 23 für den Helligkeitsgradienten 21 resultieren. Eine zweite Intensitätsverteilung 28 kann beispielsweise in dem zweiten Helligkeitsverlauf 36 resultieren. Insbesondere kann die zweite Intensitätsverteilung 28 in dem zweiten Wert 22 für den Helligkeitsgradienten 21 resultieren. Die Helligkeit der einzelnen Leuchtpunkte 26 wird dabei insbesondere durch die Steuereinheit 12 eingestellt beziehungsweise vorgegeben. Beispielsweise werden einzelne der Leuchtpunkte 26 zum Einstellen der Helligkeit gedimmt.

Der Rand 18 der vorbestimmten Lichtverteilung 34 kann beispielsweise dadurch definiert sein, dass der Helligkeitsverlauf 20 auf einen vorbestimmten Bruchteil, beispielsweise die Hälfte, abgefallen ist. Analog kann die Hell-Dunkel-Grenze 32 dadurch definiert sein, dass der Helligkeitsverlauf 20 auf den vorbestimmten Bruchteil, insbesondere die Hälfte, abgefallen ist. Die Lage und/oder Position der vorbestimmten Lichtverteilung 34 beziehungsweise des vorbestimmten Leuchtkegels 35 kann durch die Lage und/oder Position des Randes 18 und/oder der Hell-Dunkel-Grenze 32 definiert sein. Beispielsweise ist es vorgesehen, dass beim Verändern des Helligkeitsgradienten 21 die Lage und/oder Position der vorbestimmten Helligkeitsverteilung 34 nicht verändert wird. Ein erster Halbwertspunkt 25 und/oder ein zweiter Halbwertspunkt 24 charakterisieren die Position, in der die erste Helligkeitsverteilung 37 und/oder die zweite Helligkeitsverteilung 36 auf die Hälfte abgefallen sind. Insbesondere ist vorgesehen, dass beim Verändern des Helligkeitsgradienten die Position der Halbwertspunkte 24, 25 nicht verändert wird. Mit anderen Worten befindet sich der erste Halbwertspunkt 25 für den ersten Wert 23 des Helligkeitsgradienten 21 in derselben Position wie der zweite Halbwertspunkt 24 für den zweiten Wert 22 des Helligkeitsgradienten 21. Analog dazu können jeweilige Grenzen 27 in der Intensität der Abstrahlung der Leuchtpunkte 26 für unterschiedliche Helligkeitsgradienten 21 dieselbe Position gemäß der x-Achse einnehmen.

Das Kraftfahrzeug 1 kann eine Ermittlungseinrichtung 14 umfassen. Die Ermittlungseinrichtung 14 kann beispielsweise zum Ermitteln einer Wettergröße ausgebildet sein. Beispielsweise umfasst die Ermittlungseinrichtung 14 einen Helligkeitssensor, einen Regensensor, eine Kamera, einen Nebelsensor oder einen Luftfeuchtigkeitssensor. Die Ermittlungseinrichtung 14 ist beispielsweise zum Ermitteln einer Sonneneinstrahlung, einer Niederschlagsmenge, einer Luftfeuchtigkeit, einer Niederschlagsart, beispielsweise Regen oder Schnee, einer Sichtweite oder eine Nebelintensität als Teil der Wettergröße ausgebildet. Mit anderen Worten kann eine Wettergröße, die mehrere Wetterdaten umfassen kann, von der Ermittlungseinrichtung 14 ermittelt werden. Der Helligkeitsgradient 21 kann dann in Abhängigkeit von der Wettergröße verändert werden. Beispielsweise wird der Helligkeitsgradient 21 auf den ersten Wert 23 eingestellt, wenn die Niederschlagsintensität und/oder die Nebelintensität einen vorbestimmten Grenzwert überschreitet. Beispielweise wird der Helligkeitsgradient 21 auf den zweiten Wert 22 eingestellt, wenn die Niederschlagsintensität und/oder die Nebelintensität einen vorbestimmten Grenzwert unterschreitet. Durch Nebel und/oder Niederschlag kann der Helligkeitsgradient 21 an der Hell-Dunkel-Grenze 32 durch Reflexionen und Streuung aufgeweicht werden, weshalb, verglichen mit Bedingungen ohne Niederschlag, ein größerer Helligkeitsgradient 21 vorteilhaft sein kann.

Das Kraftfahrzeug 1 kann eine weitere Ermittlungseinrichtung 63 zusätzlich oder alternativ zu der Ermittlungseinrichtung 14 aufweisen. Die weitere Ermittlungseinrichtung 63 ist beispielsweise zum Ermitteln eines Müdigkeitsniveaus eines Fahrers des Kraftfahrzeugs 1, einer Fahrtdauer oder von Präferenzdaten des Fahrers ausgebildet. Beispielsweise können durch die weitere Ermittlungseinrichtung 63 Präferenzdaten von dem Fahrer empfangen werden, welche beispielsweise angeben, ob der Fahrer einen hohen Helligkeitsgradienten 21, beispielsweise den ersten Wert 23, oder einen kleinen Helligkeitsgradienten 21, beispielsweise den zweiten Wert 22, bevorzugt. Beispielsweise werden die Präferenzdaten aus einer Eingabevorrichtung, insbesondere aus einem Mensch-Maschine-Interface (MMI) empfangen. Alternativ oder zusätzlich kann der Helligkeitsgradient 21 auf den ersten Wert 23 eingestellt werden, wenn das Müdigkeitsniveau des Fahrers und/oder die Fahrtdauer einen weiteren vorbestimmten Grenzwert unterschreitet. Alternativ oder zusätzlich kann der Helligkeitsgradient 21 auf den zweiten Wert 22 eingestellt werden, wenn das Müdigkeitsniveau des Fahrers und/oder die Fahrtdauer den weiteren vorbestimmten Grenzwert überschreitet. Als das Müdigkeitsniveau des Fahrers kann beispielsweise ein Wert ermittelt werden, der die Müdigkeit des Fahrers charakterisiert. Hierzu sind dem Fachmann aus dem Stand der Technik mehrere Möglichkeiten wohl bekannt. Die Fahrtdauer kann die bisherige Fahrtdauer seit Fahrtantritt, eine Gesamtfahrtdauer von einem Startpunkt zu einem Zielpunkt oder eine restliche Fahrdauer von einer momentanen Position zu dem Zielpunkt betreffen. Der Zielpunkt oder den Zielpunkt betreffende Daten können dabei insbesondere aus einem Navigationssystem empfangen werden. Durch Einstellen des Helligkeitsgradienten 21 abhängig von dem Müdigkeitsniveau des Fahrers und/oder der Fahrtdauer, kann berücksichtigt werden, dass ein hoher Helligkeitsgradient 21, beispielsweise eingestellt auf den ersten Wert 23, eine vorteilhafte Lichtverteilung an der Hell-Dunkel-Grenze 32 ermöglichen kann, jedoch den Fahrer stärker anstrengt und/oder ermüdet.

Das Einschalten und Ausschalten der einzelnen Leuchtpunkte 26 kann durch Kalibrieren erfolgen. Dazu können die Lichtverteilung 34 und/oder der Leuchtkegel 35 durch eine Erfassungseinrichtung 15 erfasst. Bei der Erfassungseinrichtung 15 handelt es sich beispielsweise um einen Helligkeitssensor oder eine Kamera. In der Erfassungseinrichtung 15 können Leuchtkegeldaten als gespeicherte Leuchtkegeldaten gespeichert sein. Die gespeicherten Leuchtkegeldaten können eine Form und/oder Position für die Lichtverteilung 34 beziehungsweise für den Leuchtkegel 35 angeben. Beim Kalibrieren können die Leuchtpunkte 26 derart eingeschaltet und ausgeschaltet werden, dass der Leuchtkegel 35 beziehungsweise die Lichtverteilung 34 dem vorbestimmten Leuchtkegel beziehungsweise der vorbestimmten Lichtverteilung entspricht. Insbesondere erfasst die Erfassungseinrichtung 15 hierzu die durch den Scheinwerfer 11 abgestrahlte Lichtverteilung 34 beziehungsweise den durch den Scheinwerfer 11 abgestrahlten Leuchtkegel 35.

Zum Kalibrieren des Leuchtkegels 35 beziehungsweise der Helligkeitsverteilung 34 kann der Helligkeitsgradient 21 beispielsweise auf den ersten Wert 23 oder einen noch größeren Wert, insbesondere einen Maximalwert, eingestellt werden. Dadurch kann der Leuchtkegel 35 beziehungsweise die Helligkeitsverteilung 34 durch die Erfassungseinrichtung 15 aufgrund der scharfen Hell-Dunkel-Grenze 32 besonders gut erfasst werden. Während der Fahrt des Kraftfahrzeugs 1 kann der Helligkeitsgradient 21 auf einen kleineren Wert, insbesondere verglichen mit dem Wert des Helligkeitsgradienten 21 beim Kalibrieren, eingestellt werden. Beispielsweise würde Helligkeitsgradient 21 während der Fahrt des Kraftfahrzeugs 1 beispielsweise auf den zweiten Wert 22 eingestellt.

Das Kraftfahrzeug 1 weist vorliegend zusätzlich ein weiteres Scheinwerfersystem 50, umfassend einen weiteren Scheinwerfer 51 und eine weitere Steuereinheit 52, auf. Der weitere Scheinwerfer 51 stahlt eine weitere vorbestimmte Lichtverteilung 53 ab. Das Scheinwerfersystem 10 und das weitere Scheinwerfersystem 51 sind vorliegend als linker beziehungsweise rechter Frontscheinwerfer ausgebildet.

Im Rahmen des vorliegenden Ausführungsbeispiel sind nur zwei beispielhafte Werte 22, 23 für den Helligkeitsgradienten 21 angegeben. Dies ist jedoch nur beispielhaft zu verstehen, selbstverständlich kann der Helligkeitsgradient situationsabhängig auf eine Vielzahl unterschiedlicher Werte eingestellt werden. Es können somit beliebig viele Werte für den Helligkeitsgradienten 21 vorgegeben werden, insbesondere abhängig von unterschiedliche Fahrsituationen. Die unterschiedlichen Fahrsituationen können durch die Wettergröße, Fahrtdauer, Müdigkeit, Kalibrierung und weitere Daten charakterisiert werden. Dabei kann insbesondere nur ein Wert für den Helligkeitsgradienten 21 zu einem Zeitpunkt eingestellt sein.

Insgesamt zeigen die Beispiele, wie durch die Erfindung ein Helligkeitsgradient 21 einer vorbestimmten Lichtverteilung 34 dynamisch verändert werden kann.

## Patentansprüche

1. Verfahren zum Betreiben eines Scheinwerfers (11) für ein Kraftfahrzeug (1), mit den Schritten:
- Ansteuern einer Vielzahl von Leuchtpunkten (26) des Scheinwerfers (11), wobei jeder Leuchtpunkt (26) aus der Vielzahl von Leuchtpunkten (26) einen jeweiligen vorbestimmten Raumwinkelbereich ausleuchtet,
- Einschalten und Ausschalten einzelner Leuchtpunkte (26) aus der Vielzahl von Leuchtpunkten (26) des Scheinwerfers (11) derart, dass der Scheinwerfer (11) eine vorbestimmte Lichtverteilung (34) mit einer Hell-Dunkel-Grenze (32) erzeugt, und
- Verändern eines Helligkeitsgradienten (21) der vorbestimmten Lichtverteilung (34) zum Verändern einer Schärfe der Hell-Dunkel-Grenze (32),
**dadurch gekennzeichnet, dass**
- das Verändern des Helligkeitsgradienten (21) durch Dimmen der Helligkeit von Leuchtpunkten (26) aus der Vielzahl von Leuchtpunkten (26) erfolgt, ohne eine Form und/oder eine Position der vorbestimmten Lichtverteilung (34) zu beeinflussen, und
- ein Wert für den Helligkeitsgradienten (21) in Abhängigkeit von einem Müdigkeitsniveau des Fahrers eingestellt wird, wobei
- der Helligkeitsgradient auf einen weiteren ersten Wert (23) eingestellt wird, wenn das Müdigkeitsniveau des Fahrers und/oder die Fahrtdauer einen weiteren vorbestimmten Grenzwert unterschreitet, und auf einen weiteren zweiten Wert (22) eingestellt wird, wenn das Müdigkeitsniveau des Fahrers und/oder die Fahrtdauer den weiteren vorbestimmten Grenzwert überschreitet, wobei der weitere erste Wert (23) größer ist als der weitere zweite Wert (22).

2. Verfahren nach Anspruch 1,
**dadurch gekennzeichnet, dass**
der Wert für den Helligkeitsgradienten (21) zusätzlich in Abhängigkeit von Präferenzdaten des Fahrers, einer Fahrtdauer oder einer Wettergröße eingestellt wird.

3. Verfahren nach Anspruch 2,
**dadurch gekennzeichnet, dass**
der Helligkeitsgradient (21) in Abhängigkeit von der Wettergröße auf einen ersten Wert (23) eingestellt wird, wenn eine Niederschlagsintensität und/oder eine Nebelintensität einen vorbestimmten Grenzwert überschreitet, und auf einen zweiten Wert (22) eingestellt wird, wenn die Niederschlagsintensität und/oder die Nebelintensität den vorbestimmten Grenzwert unterschreitet, wobei der erste Wert (23) größer ist als der zweite Wert (22).

4. Verfahren nach einem der vorhergehenden Ansprüche,
**dadurch gekennzeichnet, dass**
das Einschalten und Ausschalten der einzelnen Leuchtpunkte (26) aus der Vielzahl von Leuchtpunkten (26) durch Kalibrieren erfolgt, wobei die vorbestimmte Lichtverteilung (34) durch eine Erfassungseinrichtung (15) erfasst wird und das Kalibrieren durch Vergleichen der erfassten Lichtverteilung mit gespeicherten Leuchtkegeldaten erfolgt.

5. Verfahren nach Anspruch 4,
**dadurch gekennzeichnet, dass**
der Helligkeitsgradient (21) für das Kalibrieren auf einen Wert (23) eingestellt wird, der größer ist, als ein Wert (22), auf den der Helligkeitsgradient während einer Fahrt des Kraftfahrzeugs (1) eingestellt wird.

6. Scheinwerfersystem (10) für ein Kraftfahrzeug (1), mit
- einem Scheinwerfer (11), der eine Vielzahl von Leuchtpunkten (26) aufweist, wobei jeder Leuchtpunkt (26) aus der Vielzahl von Leuchtpunkten (26) einen jeweiligen vorbestimmten Raumwinkelbereich ausleuchtet, und mit
- einer Steuereinheit (12), die dazu eingerichtet ist, die Vielzahl von Leuchtpunkten (26) des Scheinwerfers (11) derart anzusteuern, dass der Scheinwerfer (11) eine vorbestimmte Lichtverteilung (34) mit einer Hell-Dunkel-Grenze (32) erzeugt, und die dazu eingerichtet ist, einen Helligkeitsgradienten (21) der vorbestimmten Lichtverteilung (34) zum Verändern einer Schärfe der Hell-Dunkel-Grenze (32) zu verändern, **dadurch gekennzeichnet, dass**
die Steuereinheit (12) dazu eingerichtet ist, das Verändern des Helligkeitsgradienten (21) durch Dimmen einer Helligkeit von Leuchtpunkten (26) aus der Vielzahl von Leuchtpunkten (26) vorzunehmen, ohne eine Form und/oder eine Position der vorbestimmten Lichtverteilung (34) zu beeinflussen, und
die Steuereinheit (12) dazu eingerichtet ist, einen Wert für den Helligkeitsgradienten (21) in Abhängigkeit einem Müdigkeitsniveau des Fahrers einzustellen, und dabei
- den Helligkeitsgradient auf einen weiteren ersten Wert (23) einzustellen, wenn das Müdigkeitsniveau des Fahrers und/oder die Fahrtdauer einen weiteren vorbestimmten Grenzwert unterschreitet, und auf einen weiteren zweiten Wert (22) einzustellen, wenn das Müdigkeitsniveau des Fahrers und/oder die Fahrtdauer den weiteren vorbestimmten Grenzwert überschreitet, wobei der weitere erste Wert (23) größer ist als der weitere zweite Wert (22).

7. Scheinwerfersystem (10) nach Anspruch 6,
**dadurch gekennzeichnet, dass**
der Scheinwerfer (11) ein Matrixleuchtmittel, eine Anordnung von Mikrospiegeln, eine Anordnung von Flüssigkristallen oder einen Laserscanner aufweist.

8. Scheinwerfersystem (10) nach Anspruch 6 oder 7,
**dadurch gekennzeichnet, dass**
der Scheinwerfer (11) dazu ausgebildet ist, zumindest zehn Linienpaare pro Grad umzusetzen, insbesondere bei einem Michelson-Kontrast von zumindest 0,98.

9. Kraftfahrzeug (1) mit einem Scheinwerfersystem (10) nach einem der Ansprüche 6 bis 8.

## Claims

1. Method for operating a headlight (11) for a motor vehicle (1), with the steps:
- controlling a multiplicity of illuminated spots (26) of the headlight (11), wherein each illuminated spot (26) of the multiplicity of illuminated spots (26) illuminates a respectively predetermined solid angle region,
- switching-on and switching-off individual illuminated spots (26) of the multiplicity of illuminated spots (26) of the headlight (11) such that the headlight (11) generates a predetermined light distribution (34) having a light-dark boundary (32), and
- altering a brightness gradient (21) of the predetermined light distribution (34) for altering a clarity of the light-dark boundary (32),
**characterised in that**
- the altering of the brightness gradient (21) by dimming the brightness of illuminated spots (26) of the multiplicity of illuminated spots (26) is carried out without influencing a shape and/or a position of the predetermined light distribution (34), and
- a value is set for the brightness gradient (21) depending on a fatigue level of the driver, wherein
- the brightness gradient is set to a further first value (23) when the fatigue level of the driver and/or the journey time undershoots a further predetermined threshold value, and is set to a further second value (22) when the fatigue level of the driver and/or the journey time exceeds the further predetermined threshold value, wherein the further first value (23) is greater than the further second value (22).

2. Method according to claim 1,
**characterised in that**
the value for the brightness gradient (21) is set additionally depending on preference data of the driver, a journey time or a weather parameter.

3. Method according to claim 2,
**characterised in that**
the brightness gradient (21) is set, depending on the weather parameter, to a first value (23), when a precipitation intensity and/or a fog intensity exceeds a predetermined threshold value, and is set to a second value (22) when the precipitation intensity and/or the fog intensity undershoots the predetermined threshold value, wherein the first value (23) is greater than the second value (22).

4. Method according to any of the preceding claims,
**characterised in that**
the switching-on and switching-off of the individual illuminated spots (26) of the multiplicity of illuminated spots (26) is carried out by calibrating, wherein the predetermined light distribution (34) is detected by a detecting apparatus (15) and the calibrating is carried out by comparing the detected light distribution with saved light cone data.

5. Method according to claim 4,
**characterised in that**
the brightness gradient (21) for the calibration is set to a value (23) which is greater than a value (22) to which the brightness gradient is set during a journey of the motor vehicle (1).

6. Headlight system (10) for a motor vehicle (1), with
- a headlight (11) which has a multiplicity of illuminated spots (26), wherein each illuminated spot (26) of the multiplicity of illuminated spots (26) illuminates a respected predetermined solid angle region, and with
- a control unit (12) which is configured to control the multiplicity of illuminated spots (26) of the headlight (11) such that the headlight (11) generates a predetermined light distribution (34) with a light-dark boundary (32), and which is configured to alter a brightness gradient (21) of the predetermined light distribution (34) for altering a clarity of the light-dark boundary (32),
**characterised in that**
the control unit (12) is configured to undertake the alteration of the brightness gradient (21) by dimming a brightness of illuminated spots (26) of the multiplicity of illuminated spots (26) without influencing a shape and/or a position of the predetermined light distribution (34), and
the control unit (12) is configured to set a value for the brightness gradient (21) depending on a fatigue level of the driver, and in this regard
- to set the brightness gradient to a further first value (23) when the fatigue level of the driver and/or the journey time undershoots a further predetermined threshold value, and to set it to a further second value (22) when the fatigue level of the driver and/or the journey time exceeds the further predetermined threshold value, wherein the further first value (23) is greater than the further second value (22).

7. Headlight system (10) according to claim 6,
**characterised in that**
the headlight (11) has a matrix light source, an arrangement of micro-mirrors, and arrangement of liquid crystals or a laser scanner.

8. Headlight system (10) according to claim 6 or 7,
**characterised in that**
the headlight (11) is configured to implement at least ten line pairs per degree, in particular in the case of a Michelson-contrast of at least 0.98.

9. Motor vehicle (1) having a headlight system (10) according to any of claims 6 to 8.

## Revendications

1. Procédé de fonctionnement d'un phare (11) pour un véhicule automobile (1), avec les étapes de :
- la commande d'une pluralité de points lumineux (26) du phare (11), dans lequel chaque point lumineux (26) parmi la pluralité de points lumineux (26) éclaire une plage angulaire spatiale prédéterminée respective,
- la mise en et hors service de points lumineux individuels (26) parmi la pluralité de points lumineux (26) du phare (11) de telle manière que le phare (11) génère une distribution de lumière (34) prédéterminée avec une limite obscurité-clarté (32), et
- la modification d'un gradient de luminosité (21) de la distribution de lumière prédéterminée (34) pour la modification d'une netteté de la limite obscurité-clarté (32),
**caractérisé en ce que**
- la modification du gradient de luminosité (21) est effectuée par variation de la luminosité de points lumineux (26) parmi la pluralité de points lumineux (26) sans influencer une forme et/ou une position de la distribution de lumière (34) prédéterminée, et
- une valeur pour le gradient de luminosité (21) est réglée en fonction d'un niveau de fatigue du conducteur, dans lequel
- le gradient de luminosité est réglé à une autre première valeur (23) lorsque le niveau de fatigue du conducteur et/ou la durée du trajet ne descend pas sous une autre valeur limite prédéterminée, et est réglé à une autre seconde valeur (22) lorsque le niveau de fatigue du conducteur et/ou la durée du trajet dépasse l'autre valeur limite prédéterminée, dans lequel l'autre première valeur (23) est supérieure à l'autre seconde valeur (22).

2. Procédé selon la revendication 1,
**caractérisé en ce que**
la valeur pour le gradient de luminosité (21) est réglée en outre en fonction de données préférentielles du conducteur, d'une durée du trajet ou d'une grandeur de conditions météorologiques.

3. Procédé selon la revendication 2,
**caractérisé en ce que**
le gradient de luminosité (21) est réglé en fonction de la grandeur de conditions météorologiques à une première valeur (23) lorsqu'une intensité de précipitation et/ou une intensité de brouillard dépasse une valeur limite prédéterminée, et est réglé à une seconde valeur (22) lorsque l'intensité de précipitation et/ou l'intensité de brouillard ne descend pas sous la valeur limite prédéterminée, dans lequel la première valeur (23) est supérieure à la seconde valeur (22).

4. Procédé selon l'une des revendications précédentes,
**caractérisé en ce que**
la mise en service et la mise hors service des points lumineux individuels (26) parmi la pluralité de points lumineux (26) sont effectuées par étalonnage, dans lequel la distribution de lumière (34) prédéterminée est détectée par un dispositif de détection (15) et l'étalonnage est effectué par comparaison de la distribution de lumière détectée avec des données de cône lumineux enregistrées.

5. Procédé selon la revendication 4,
**caractérisé en ce que**
le gradient de luminosité (21) est réglé pour l'étalonnage à une valeur (23) qui est supérieure à une valeur (22) à laquelle le gradient de luminosité est réglé pendant un trajet du véhicule automobile (1).

6. Système de phare (10) pour un véhicule automobile (1), avec
- un phare (11) qui présente une pluralité de points lumineux (26), dans lequel chaque point lumineux (26) parmi la pluralité de points lumineux (26) éclaire une plage angulaire spatiale prédéterminée respective, et avec
- une unité de commande (12) qui est aménagée afin de commander la pluralité de points lumineux (26) du phare (11) de telle manière que le phare (11) génère une distribution de lumière (34) prédéterminée avec une limite obscurité-clarté (32), et qui est aménagée afin de modifier un gradient de luminosité (21) de la distribution de lumière (34) prédéterminée pour la modification d'une netteté de la limite obscurité-clarté (32),
**caractérisé en ce que**
l'unité de commande (12) est aménagée afin d'entreprendre la modification du gradient de luminosité (21) par variation d'une luminosité de points lumineux (26) parmi la pluralité de points lumineux (26) sans influencer une forme et/ou une position de la distribution de lumière (34) prédéterminée, et
l'unité de commande (12) est aménagée afin de régler une valeur pour le gradient de luminosité (21) en fonction d'un niveau de fatigue du conducteur, et en même temps
- de régler le gradient de luminosité à une autre première valeur (23) lorsque le niveau de fatigue du conducteur et/ou la durée du trajet ne descend pas sous une autre valeur limite prédéterminée, et de régler à une autre seconde valeur (22) lorsque le niveau de fatigue du conducteur et/ou la durée du trajet dépasse l'autre valeur limite prédéterminée, dans lequel l'autre première valeur (23) est supérieure à l'autre seconde valeur (22).

7. Système de phare (10) selon la revendication 6,
**caractérisé en ce que**
le phare (11) présente un moyen lumineux de matrice, un agencement de micro-miroirs, un agencement de cristaux liquides ou un scanner laser.

8. Système de phare (10) selon la revendication 6 ou 7,
**caractérisé en ce que**
le phare (11) est réalisé afin de convertir au moins dix paires de lignes par degré, en particulier pour un contraste de Michelson d'au moins 0,98.

9. Véhicule automobile (1) avec un système de phare (10) selon l'une des revendications 6 à 8.
